Europäisches Patentamt

European Patent Office

Office européen des brevets

(11) Publication number: **0 337 670**
**A2**

(19)

## (12) EUROPEAN PATENT APPLICATION

(21) Application number: **89303439.7**

(22) Date of filing: **07.04.89**

(51) Int. Cl.⁴: **G08C 23/00 , H04B 9/00 , H04B 15/00**

(30) Priority: **12.04.88 GB 8808612**

(43) Date of publication of application:
**18.10.89 Bulletin 89/42**

(84) Designated Contracting States:
**CH DE FR GB IT LI SE**

(71) Applicant: **Renishaw plc**
**Gloucester Street**
**Wotton-Under-Edge Gloucestershire GL12 7DN(GB)**

(72) Inventor: **Collingwood, David The Cottage**
**Wigmore Green Middleyard Kings Stanley**
**Stoneshouse Gloucestershire, GL10 3QD(GB)**

(74) Representative: **Jackson, John Timothy et al**
**Patent Department Renishaw plc Gloucester Street**
**Wotton-under-Edge Gloucestershire GL12 7DN(GB)**

(54) **Signal transmission system for machine tools, inspection machines, and the like.**

(57) Probes (18A,18B,18C) can be interchangeably mounted in the spindle (12) of a machine tool. Each probe has an optical signal transmission system, in which an optical signal from a light emitting diode (24) is transmitted to a respective receiver photodiode (26A,26B,26C). To prevent interference between the different probe signals, each light emitting diode (24) emits light of a respective different colour. The photodiodes (26A,26B,26C) each receive the light through a corresponding colour filter, so as to be sensitive only to the optical signal from a respective one of the probes.

*Fig.1.*

# SIGNAL TRANSMISSION SYSTEM FOR MACHINE TOOLS, INSPECTION MACHINES, AND THE LIKE

## Field of the Invention

This invention relates to signal transmission systems, e.g. for use on machine tools, coordinate measuring machines, inspection robots, and the like (hereinafter referred to as "machine tools").

## Description of Prior Art

Various probes are known for the inspection of workpieces on such machines. They include trigger probes which provide a trigger signal when they contact or attain a predetermined relationship with a workpiece surface, and measurement probes which provide a digital or analogue output concerning the position of the surface.

Particularly when the probe is to be interchangeable with other tools, as in a machine tool, it is known to provide a wireless transmission system for transmitting the probe output signal back to an interface with the machine. For example, US Patent No. 4,509,266 describes an optical (infra red) transmission system. Such systems are also commercially available from Renishaw Metrology Ltd, of Wotton-under-Edge, Gloucestershire, United Kingdom. Similar systems can also be used to transmit signals from other sensors, e.g. relating to the presence or position of workpieces on the machine bed or on a conveyor or pallet, or to the status of a device such as a vice, a gripper or a robot. See, for example, US Patent No. 4,545,106.

It is known to have a transmitter which receives two sensor signals for transmission. For example, US Patents 4,608,714 and 4,658,509 provide two signals to a single transmitter, and the two signals are modulated onto the infra red beam transmitted by a frequency shift keying (FSK) method. The infra red receiver is provided with circuits to demodulate and detect the two signals from the received beam. Other methods of encoding the transmitted signal onto the infra red beam can also be used, such as pulse code modulation or asynchronous serial data transmission which provide for the transmission of greater amounts of information.

If it is desired to transmit sensor information from two or more separate transmitters, however, the problem arises that the separate transmissions may interfere with one another. For example, this may occur if two probes are installed on a machine. US Patent No. 4,608,714 shows an FSK system in which the centre frequency of the transmitter and of the receiver can be individually tuned. This provides for the use of two or more transmitter/receiver sets, tuned to different centre frequencies. However, such an arrangement is less suited to other signal encoding methods such as pulse code modulation or asynchronous serial transmission.

## Summary of the Invention

The present invention provides a signal transmission system for a machine tool which has a plurality of sensors for producing a signal in response to a sensed condition, the system comprising:
a plurality of optical signal transmitters, one for each sensor, for transmitting a signal associated therewith, and
a plurality of receivers for receiving the optical signals, one receiver being associated with each transmitter,
wherein the optical radiation produced by each transmitter has a different colour from other transmitter(s), and wherein the associated receiver is sensitive to the colour transmitted by the corresponding transmitter, but insensitive to the colour(s) transmitted by other transmitter(s).

The receivers (or some of them) may be made sensitive to the respective colours by use of optical filters. The transmitters (or some of them) may similarly be made to radiate only the desired colour by the use of optical filters. The term "colour" is to be interpreted broadly, as including not only various wavelengths of visible light, but also other wavelengths, e.g. various wavelengths of infra red radiation.

## Brief Description of the Drawings

A preferred embodiment of the invention will now be described by way of example, with reference to the accompanying drawings, wherein:
Fig. 1 is a schematic diagram of a machine tool, and
Fig. 2 is a block diagram of a signal transmission system provided on the machine tool.

## Description of Preferred Embodiment

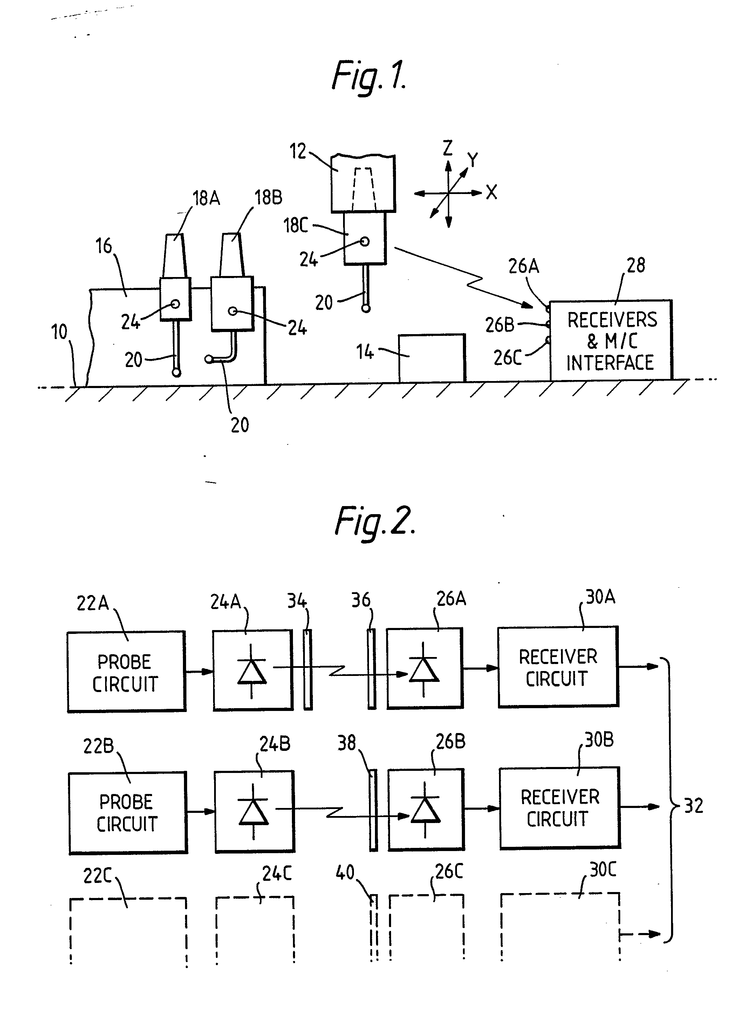

Fig. 1 shows the bed 10 and tool holding spindle 12 of a machine tool. The spindle 12 can be moved in X,Y and Z directions relative to the bed 10, in order to perform machining and inspection operations upon a workpiece 14 clamped to the bed 10. To machine the workpiece, the spindle 12 can pick up any of a variety of cutting tools (not shown) stored in a tool magazine 16, under the program control of a computer numerical control (not shown). To perform inspection operations, the spindle 12 can pick up any of a plurality of probes 18A,18B,18C which are also stored in the magazine 16. Three such probes are shown, but there may be only two, or more than three.

The probes shown in Fig. 1 have workpiece contacting styli 20, and they may be either touch trigger probes, or measurement or scanning probes which provide outputs proportional to stylus displacement. Alternatively, they may sense the workpiece in a non-contact manner, e.g. optically. Each has a circuit 22A,22B,22C (Fig. 2) for providing its output signal, and possibly also other signals, e.g. relating to battery condition. To transmit these probe signals back to the machine, each probe is provided with a signal transmission circuit including a light emitting diode (LED) 24A,24B,24C on the surface of the probe as shown in Fig. 1. If desired, more than one such LED can be spaced around the circumference of the probe to provide omni-directional transmission. The probe output signals are thus transmitted optically to a receiver module 28 which is interfaced with the numerical control. Circuits for modulating the signals produced by the circuits 22A,22B,22C onto the optical signals transmitted by the LEDs 24A,24B,24C are conventional, and need not be described further.

However, if two of the conventional transmitter units should happen to be transmitting an optical signal at the same time, there is a risk of both being received by the receiver module 28. In previously known systems, this could cause interference between the different probes, and so it was necessary to ensure that only one probe was transmitting at any one time. This meant that two probes could not be used simultaneously, as is increasingly a requirement (for example in a dual spindle machining centre, where there may be a probe in each spindle, or on a lathe where there may be both a probe for workpiece gauging and a probe for tool setting). There is also a danger of interference between probes on adjacent machine tools. Even in an environment where only one probe is used at once, where advantage can be taken of the fact that conventionally, each probe switches itself off after a pre-determined period of non-use (say one or two minutes), it is necessary to wait until the end of the one or two minute period before commencing to use another probe. This is a waste of time and therefore an inefficient use of the machine tool.

The receiver module 28 therefore includes separate receiving photo diodes 26A,26B,26C for each of the probes 18A,18B,18C. Each of these photo diodes has a respective generally conventional receiver circuit 30A,30B,30C for detecting and demodulating the received signal prior to passing it via outputs 32 to further circuitry of the interface and on to the numerical control of the machine.

To prevent interference between the transmitter and receiver of one probe and those of another probe, each LED 24A,24B,24C is arranged to radiate a different colour, and the receiving photo diodes 26A,26B,26C are arranged to be responsive only to the colour corresponding to its own LED. For example, the LED 24A may be one which emits red light. To prevent it emitting other colours, such as infra red light, a band-pass optical filter 34 is placed in front of it on the housing of the probe. The filter 34 transmits only light having a wavelength of 650 nm, namely red light. On the housing of the receiver module 28, in front of the corresponding photo diode 26A, there is a similar 650 nm optical band pass filter 36. This ensures that the photo diode 26A is only responsive to the red light emitted by the corresponding LED 24A. The LED 24B is an infra red emitting LED, at a wavelength of 920 nm. Since infra red light emitting diodes are available which do not emit in the visible part of the spectrum, no filter is needed in front of the LED 24B to prevent visible emission. However, the corresponding photo diode 26B in the receiver module 28 does have a filter 38 in front of it. The filter 28 is an optical low pass filter which causes the photo diode 28B to be sensitive only to the infra red radiation emitted by the LED 24B.

The two colours, red and infra red are only examples of colours which can be used. For example, it would be possible to use red light and green light with appropriate filters. Indeed, in the example shown in the drawings where there are three probes, the third probe may have a light emitting diode 24C which emits green light, and a filter 40 in front of the photo diode 26C may be receptive only to green light.

The filters used are desirably interference filters, which are readily available. In a system with only two probes, it would be perfectly possible for the filters 34,36 to be high pass filters, rather than band pass filters, but band pass filters are cheaper.

One possible problem is that the use of the filters as described effectively reduces the transmitted optical signal. The signals are likely to be attenuated by different amounts in different channels. For example, the two filters 34,36 in the path between the LED 24A and photo diode 26A cause greater attentuation than the single filter in the path between the LED 24B and the photo diode 26B. This is particularly so, since the band pass filters 34,36 have greater attenuation than the low pass filter 38. This problem can of course be overcome by having a higher gain in the receiver circuit 30A than in the corresponding circuit 30B. However, our preference is to use a higher output LED 24A than 24B, so that the photo diodes 26A,26B are made sensitive to the same order of magnitude. For example, the filter 38 may have a transmittance of 90%, giving only negligible attenuation of the signal from the LED 24B to the photo diode 26B. On the other hand, the transmittances of the filters 34,36 may each be only 50% or 70% giving a combined transmittance of only 25% or 50% approximately. Thus, the LED 24A may be driven at twice or four times the power output of the LED 24B.

The system desribed has used filters to distinguish the signals transmitted from various probes to the machine interface. However, the same principle may also be used in systems where signals are transmitted from other sensors, e.g. relating to the presence or position of workpieces on the machine bed or on a conveyor or pallet, or to the status of a device such as a vice, or a gripper or a robot. Systems are also known in which a signal is transmitted from the machine interface to a probe or other sensor, e.g. to switch the sensor on. The principle described above may also be used in this case, using differently coloured signals to distinguish which individual sensor is to be switched on.

**Claims**

1. A signal transmission system for a machine tool which has a plurality of sensors (18A-C) for producing a signal in response to a sensed condition, the system comprising:
a plurality of optical signal transmitters (24A-C), one for each sensor, for transmitting a signal associated therewith, and
a plurality of receivers (26A-C) for receiving the optical signals, one receiver being associated with each transmitter,
wherein the optical radiation produced by each transmitter (24A-C) has a different colour from other transmitter(s), and wherein the associated receiver (26A-C) is sensitive to the colour transmitted by the corresponding transmitter, but insensitive to the colour(s) transmitted by other transmitter(s).

2. A signal transmission system according to claim 1, wherein at least one said receiver (26A-C) includes an optical filter (36-40), said optical filter providing said sensitivity to the colour transmitted by the corresponding transmitter (24A-C) and said insensitivity to the colour(s) transmitted by other transmitter(s).

3. A signal transmission system according to claim 2, wherein each of said receivers (26A-C) has a respective said optical filter (36-40).

4. A signal transmission system according to claim 2 or claim 3, wherein said optical filter (36-40) is an interference filter.

5. A signal transmission system according to any one of the preceding claims, wherein at least one said transmitter (24B-C) is a light emitting diode which emits light of the corresponding colour.

6. A signal transmission system according to any one of the preceding claims, wherein at least one said transmitter (24A) includes an optical filter (34) which passes light of the corresponding colour.

7. A signal transmission system according to claim 6, wherein said optical filter (34) is an interference filter.

8. A signal transmission system according to any one of the preceding claims, wherein at least one said transmitter (24A-C) has a different power output from at least one other said transmitter.

9. A signal transmission system according to any one of the preceding claims, wherein at least one said colour is visible.

10. A signal transmission system according to any one of the preceding claims, wherein at least one said colour is infra red.

## Fig.1.

## Fig.2.